# EUROPÄISCHE PATENTSCHRIFT

(11) **EP 0 384 984 B1**
(45) Veröffentlichungstag und Bekanntmachung des Hinweises auf die Patenterteilung: **31.03.1993**
(21) Anmeldenummer: 89123900.6
(22) Anmeldetag: 23.12.1989
(51) Int. Cl.: C08G 69/32, C08G 69/42

(54) **Verfahren zur Herstellung eines thermoplastisch verarbeitbaren, aromatischen Polyamids**
Process for manufacture of thermoplastic, processable polyamide
Procédé de fabrication d'un polyamide aromatique, thermoplastique et façonnable

(30) Priorität: 25.02.1989 DE 3905885
(43) Veröffentlichungstag der Anmeldung: 05.09.1990
(73) Patentinhaber: HÜLS AKTIENGESELLSCHAFT, 45764 Marl (DE)
(72) Erfinder: Finke, Jürgen, Dr., D-4370 Marl (DE); Bartmann, Martin, Dr., D-4350 Recklinghausen (DE); Feinauer, Roland, Dr., D-4370 Marl (DE)

(56) Entgegenhaltungen:
- EP-A- 0 162 606
- EP-A- 0 231 433
- DE-A- 3 609 011

## Beschreibung

Gegenstand der Erfindung ist ein Verfahren zur Herstellung eines thermoplastisch verarbeitbaren, aromatischen Polyamids durch Polykondensieren nach stehender Ausgangsmonomeren:
A. HOOC - Ar - COOH
B. H₂N - Ar′ - NH₂

   hierbei bedeutet
   Ar: 1.3- oder 1.4-Phenylen; 1.4-, 1.5-, 2.6- oder 2.7-Naphthylen, 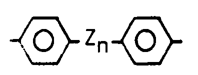 oder 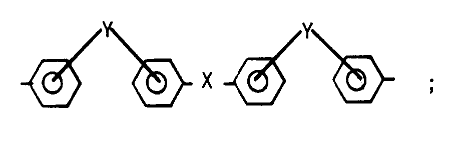
   Ar': 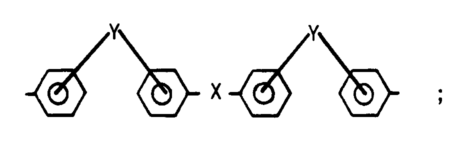
   X: -SO₂-; -CO-;
   Y: -O-; -S-;
   Z: -O-; -S-; -SO₂-; -CO-; -CR₂-;
   R: -H; C₁ - C₄-Alkyl;
   n: 0; 1;

in der Schmelze in Gegenwart einer vom Phosphor abgeleiteten Säure der allgemeinen Formel H₃POₙ mit n = 2 bis 4 oder Triphenylphosphit bei Temperaturen im Bereich von 200 bis 400 ^{°}C.

Die Herstellung solcher Polyamide ist grundsätzlich bekannt (DE-OS 36 09 011). Die Schmelzviskosität dieser aromatischen Polyamide ist allerdings hoch. Daher sind bei ihrer Herstellung und Verarbeitung sehr hohe Temperaturen erforderlich - im allgemeinen mindestens 350 ^{°}C. Bei diesen Temperaturen wird häufig eine Schädigung des Produkts beobachtet, erkennbar an Verfärbungen oder einer Verschlechterung der mechanischen Eigenschaften.

Aufgabe der Erfindung war es, Formmassen auf Basis aromatischer Polyamide zur Verfügung zu stellen, die die geschilderten Nachteile der Produkte des Standes der Technik nicht aufweisen.

Die Aufgabe wurde dadurch gelöst, daß die eingesetzten Monomeren einen Reinheitsgrad von ≧ 99,90 Gew.-% aufweisen.

Bevorzugt werden Dicarbonsäuren (Komponente A.) mit einem Reinheitsgrad im Bereich von 99,94 bis 99,999 Gew.-% und Diamine (Komponente B.) mit einem Reinheitsgrad im Bereich von 99,94 bis 99,999 Gew.-%.

Als aromatische Dicarbonsäuren (Komponente A.) kommen Isophthalsäure, Terephthalsäure, 1.4-, 1.5-, 2.6-, 2.7-Naphthalindicarbonsäure, 4.4′-Diphenyletherdicarbonsäure oder 4.4′-Benzophenondicarbonsäure, 4.4′-Diphenylsulfondicarbonsäure, 2-Phenoxy-terephthalsäure, 4.4′-Biphenyldicarbonsäure oder Gemische davon in Frage.

Bevorzugt als Komponente A. wird Isophthalsäure allein oder ein Gemisch von Isophthalsäure mit einer der weiteren oben genannten Säuren eingesetzt. Im letzteren Fall werden bis zu 45 Mol-% Isophthalsäure ersetzt.

Als aromatische Diamine (Komponente B.) kommen z. B. 4.4′-Bis(4-aminophenoxy)diphenylsulfon, 4.4′-Bis(3-aminophenoxy)diphenylsulfon, 4.4′-Bis(4-aminophenoxy)benzophenon, 4.4′-Bis(3-aminophenoxy)benzophenon, 4.4′-Bis(p-aminophenylmercapto)benzophenon, 4.4′-Bis(p-aminophenylmercapto)diphenylsulfon oder Gemische davon in Frage.

Bevorzugt wird 4.4′-Bis(4-aminophenoxy)diphenylsulfon verwendet.

Das molare Einsatzverhältnis der Komponenten A. und B. bewegt sich im Bereich von etwa 1 : 1.

Die Glastemperatur (T_{g}) der erfindungsgemäßen Polyamide liegt im Bereich von 190 bis 270 ^{°}C, die Viskositätszahlen (J-Werte) bei etwa 30 bis 100 cm³/g; bevorzugt bei 60 bis 80 cm³/g.

Um eine weitere verbesserte Hydrolysebeständigkeit der Polyamide zu erreichen, können den erfindungsgemäßen Produkten noch 0,01 bis 10 Mol-% - bezogen auf die Summe der Komponenten A. und B. - eines niedermolekularen aliphatischen, araliphatischen oder aromatischen Carbonsäureamids zugesetzt werden. Hierbei kann der aromatische Rest durch Halogen oder durch C₁- bis C₄-Alkylreste substituiert sein. Diese Maßnahme wird in DE-OS 38 04 401 beschrieben.

Die Herstellung der aromatischen Polyamide ist grundsätzlich bekannt. Sie wird u. a. in DE-OS 36 09 011 beschrieben. Danach erfolgt die Polykondensation der Komponenten A. und B in Gegenwart einer vom Phosphor abgeleiteten Säure der allgemeinen Formel H₃POₙ mit n = 2 bis 4 oder Triphenylphosphit.

Geeignete vom Phosphor abgeleitete Säuren sind hypophosphorige Säure, phosphorige Säure, Phosphorsäure.

Der Katalysator wird in Mengen von 0,01 bis 2 Mol-%, vorzugsweise 0,1 bis 0,9 Mol-% - bezogen auf die Summe der Komponenten A. und B. - eingesetzt.

Eine bevorzugte Arbeitsweise bei der Herstellung der aromatischen Polyamide ist es, neben dem phosphorhaltigen Katalysator noch Dialkylaminopyridine als Cokatalysator einzusetzen.

Besonders geeignete Dialkylaminopyridine sind solche mit 1 bis 10 C-Atomen in der Alkylgruppe. Bevorzugt verwendet werden 4-Dimethylaminopyridin, 4-Dibutylaminopyridin, 4-Piperidinylpyridin, die gegebenenfalls zusammen mit dem Aminostickstoff einen Pyrrolidin oder Piperidinring bilden können.

Sofern ein Cokatalysator benutzt wird, wird er in einer Menge von 0,01 bis 2 Mol-%, vorzugsweise von 0,1 bis 0,9 Mol-% - bezogen auf die Summe der Komponenten A. und B - eingesetzt. In besonders bevorzugten Fällen wird der Cokatalysator in einer äquivalenten Menge zu dem phosphorhaltigen Katalysator in die Reaktionsmischung zugegeben.

Die Reaktion wird in der Schmelze bei Temperaturen im Bereich von 200 bis 400 ^{°}C, vorzugsweise von 230 bis 360 ^{°}C durchgeführt.

Üblicherweise wird unter Inertgas bei Normaldruck gearbeitet. Es kann jedoch auch bei Über- bzw. Unterdruck gearbeitet werden.

Zur Erhöhung des Molekulargewichtes können die aromatischen Polyamide einer Festphasennachkondensation in einer Inertgasatmosphäre unterzogen werden.

Die Polyamide können auf üblichen Maschinen durch Spritzguß oder Extrusion zu Formmassen verarbeitet werden.

Die Formmassen können zusätzlich noch Füllstoffe, wie Talkum, oder Verstärkungsmittel, wie Glas-, ARAMID^{R}- oder Kohlefasern, sowie andere übliche Zusätze, wie z. B. Pigmente oder Stabilisatoren, enthalten.

Die Formmassen werden nach üblichen Verfahren wie Spritzguß, Extrusion o. ä. zu Formteilen, Fasern, Folien usw. verarbeitet. Ebenso ist die Verwendung als Beschichtungsmittel ausgehend vom Pulver (z. B. Wirbelsinterverfahren), einer flüssigen Dispersion oder einer Lösung möglich.

Nach dem erfindungsgemäßen Verfahren hergestellte aromatische Polyamide weisen eine unerwartet hohe Temperaturstabilität auf. Eine Verarbeitung der Produkte kann noch bei Temperaturen > 340 ^{°}C erfolgen, ohne daß eine Abnahme des Molekulargewichtes oder eine Braunfärbung eintritt. Ferner zeigen erfindungsgemäß erhaltene Formmassen eine hervorragende Stabilität gegenüber Thermooxidation, so daß sie noch bei deutlich höheren Temperaturen als entsprechende Massen des Standes der Technik eingesetzt werden können. Zu diesen Eigenschaften hinzuzurechnen ist eine gute Wärmestandfestigkeit, d. h. Formmassen, welche die erfindungsgemäßen aromatischen Polyamide zur Basis haben, können über lange Zeiträume hohen Temperaturen ausgesetzt werden, ohne daß ein deutlicher Verlust bei den mechanischen Eigenschaften auftritt.

Die in der Beschreibung und in den Beispielen genannten Parameter wurden mit Hilfe nachstehender Verfahren bestimmt.

Der Glaspunkt (T_{g}) wurde unter Verwendung eines DSC bei einer Aufheizrate von 10 ^{°}C/min. bestimmt.

Die Viskositätszahlen (J) wurden an 0,5 % Gew.-%igen Lösungen der Polyamide in einem Phenol/o-Dichlorbenzol-Gemisch (1 : 1 Gewichtsteile) bei 25 ^{°}C nach DIN 53 728 bestimmt.

Die Wärmealterung der Prüfkörper wurde in einem Umluftofen mit 10 % Frischluftzufuhr durchgeführt.

Die Messung der Reißfestigkeit erfolgte gemäß DIN 53 455/3.

Die Reinheit des Diamins wurde dünnschichtchromatographisch auf Kieselgel mit Chloroform bestimmt; die quantitative Auswertung erfolgte UV-spektroskopisch.

Die Bestimmung der Reinheit der Dicarbonsäuren erfolgte gaschromatographisch.

Mit Buchstaben gekennzeichnete Beispiele sind nicht erfindungsgemäß.-

### Beispiele Allgemeines Verfahren zur Herstellung der aromatischen Polyamide

| | |
|---|---|
| 43,25 kg (100 Mol) | 4.4'-Bis(4-aminophenoxy)diphenylsulfon *) |
| 16,61 kg (100 Mol) | Isophthalsäure (99,98 % chemische Reinheit) |
| 33 g (0,25 Mol) | 50 %ige wässrige Hypophosphorige Säure |
| 30,5 g (0,25 Mol) | 4-Dimethylaminopyridin |

| | |
|---|---|
| *) Der Reinheitsgrad des Diamins ist der Tabelle zu entnehmen. | |

Die Einsatzstoffe wurden in einem Polykondensationsreaktor mit Stickstoffeinleitung, Rührer und Destillationsvorrichtung im Stickstoffstrom von 20 l/h auf 300 °C erhitzt. Die Schmelze wurde 2 h gerührt; das bei der Reaktion freiwerdende Wasser wurde unter Entspannung über die Destillationsvorrichtung entleert. Das viskose Produkt wurde aus dem Polykondensationsreaktor abgelassen und in einem Extruder unter Anlegen von Vakuum nachkondensiert.

Die Wäremealterung an Luft erfolgte über 1000 h bei 200 °C.

**Tabelle**

| Beispiel Nr. | Reinheitsgrad [Gew.-%] | Reißfestigkeit [%] |
|---|---|---|
| 1 | ≧ 99,99 | 100 |
| 2 | 99,94 | 92 |
| 3 | 99,91 | 84 |
| 4 | 99,90 | 82 |
| A | 99,89 | 68 |
| B | 99,87 | 62 |

## Patentansprüche

1. Verfahren zur Herstellung eines thermoplastisch verarbeitbaren, aromatischen Polyamids durch Polykondensieren nachstehender Ausgangsmonomeren:
A. HOOC - Ar - COOH
B. H₂N - Ar' - NH₂
hierbei bedeutet
Ar: 1.3-oder 1.4-Phenylen; 1.4-, 1.5-, 2.6- oder 2.7-Naphthylen, 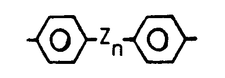 oder 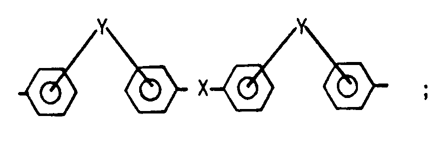
Ar': 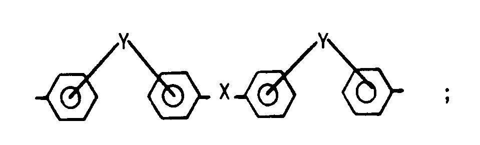
X: -SO₂-; -CO-;
Y: -O-; -S-;
Z: -O-; -S-; -SO₂-; -CO-; -CR₂-;
R: -H; C₁ - C₄-Alkyl;
n: 0; 1;
in der Schmelze in Gegenwart einer vom Phosphor abgeleiteten Säure der allgemeinen Formel H₃POₙ mit n = 2 bis 4 oder Triphenylphosphit bei Temperaturen im Bereich von 200 bis 400 °C, dadurch gekennzeichnet,
daß die eingesetzten Monomeren einen Reinheitsgrad von ≧ 99,90 Gew.-% aufweisen.

2. Verfahren nach Anspruch 1,
dadurch gekennzeichnet,
daß die eingesetzte Dicarbonsäure (Komponente A.) einen Reinheitsgrad im Bereich von 99,94 bis 99,999 Gew.-% aufweist.

3. Verfahren nach Anspruch 1 und 2,
dadurch gekennzeichnet,
daß das eingesetzte Diamin (Komponente B.) einen Reinheitsgrad im Bereich von 99,94 bis 99,999 Gew.-% aufweist.

## Claims

1. A process for the preparation of a thermoplastically processable aromatic polyamide by polycondensing the following starting monomers:
A. HOOC - Ar - COOH
B. H₂N - Ar' - NH₂
wherein
Ar denotes 1,3- or 1,4-phenylene; 1,4-, 1,5-, 2,6- or 2,7-naphthylene, 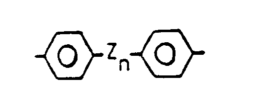 or 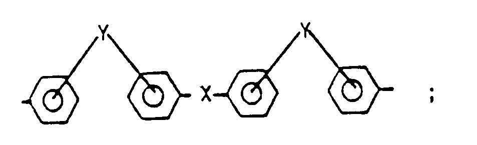 Ar' denotes 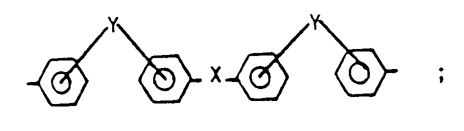 X denotes -SO₂- or -CO-,
Y denotes -O- or -S-,
Z denotes -O-, -S-, -SO₂-, -CO- or -CR₂-;
R denotes -H or C₁-C₄-alkyl; and
n denotes zero or 1,
in the melt, in the presence of an acid derived from phosphorus, of the general formula H₃POₙ, where n = 2 to 4, or of triphenyl phosphite, at temperatures in the range from 200 to 400 °C, characterised in that the monomers employed have a degree of purity of ≧ 99.90% by weight.

2. A process according to claim 1, characterised in that the dicarboxylic acid employed (component A) has a degree of purity in the range from 99.94 to 99.999% by weight.

3. A process according to claim 1 and 2, characterised in that the diamine employed (component B) has a degree of purity in the range from 99.94 to 99.999% by weight.

## Revendications

1. Procédé de préparation d'une polyamide aromatique façonnable par thermoplastie, par polycondensation des monomères de départ ci-après :
A. HOOC - Ar - COOH
B. H₂N - Ar' - NH₂,
où
Ar représente un radical 1,3- ou 1,4-phénylène ;
un radical 1,4-, 1,5-, 2,6- ou
2,7-naphtylène,
un radical 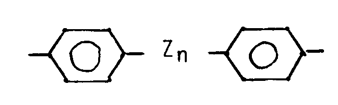 ou 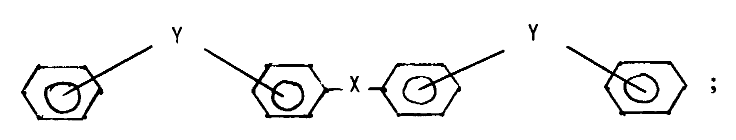
Ar' : 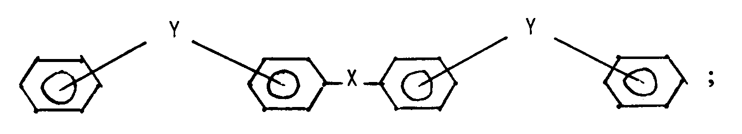
X : -SO₂- ; -CO- ;
Y : -O- ; -S- ;
Z : -O- ; -S- ; -SO₂- ; -CO- ; CR₂- ;
R : -H ; alkyle en C₁ à C₄ ;
n : zéro, 1
dans la masse fondue en présence d'un acide dérivé du phosphore et répondant à la formule H₃POₙ avec n = 2 à 4 ou de phosphite de triphényle à des températures situées dans un domaine de 200 à 400°C,
caractérisé par le fait que les monomères mis en oeuvre présentent un degré de pureté supérieur ou égal à 99,90 % en poids.

2. Procédé selon la revendication 1,
caractérisé par le fait que l'acide dicarboxylique mis en oeuvre (composant A) présente un degré de pureté compris dans un domaine de 99,94 à 99,999 % en poids.

3. Procédé selon les revendications 1 et 2,
caractérisé par le fait que la diamine mise en oeuvre (composant B) présente un degré de pureté situé dans un domaine de 99,94 à 99,999 % en poids.
